# FASCICULE DE BREVET EUROPEEN

(11) **EP 2 063 705 B1**
(45) Date de publication et mention de la délivrance du brevet: **26.11.2014**
(21) Numéro de dépôt: 07803340.4
(22) Date de dépôt: 07.09.2007
(51) Int. Cl.: A01M 25/00, A01M 1/20

(54) **METHODE ET SYSTEME DE CONTROLE DE POSTES D'APPATAGE CONTRE DES NUISIBLES**
VERFAHREN UND SYSTEM ZUR STEUERUNG VON KÖDERSTATIONEN GEGEN SCHÄDLINGE
METHOD AND SYSTEM FOR CONTROLLING BAITING STATIONS AGAINST PESTS

(30) Priorité: 21.09.2006 BE 200600473
(43) Date de publication de la demande: 03.06.2009
(73) Titulaire: Brigode, Ugo, 1800 Vilvoorde (BE)
(72) Inventeur: FROJMOVICS, Jacques, 1060 Bruxelles (BE); BRIGODE, Ugo, 1800 Vilvoorde (BE)
(74) Mandataire: Vandeberg, Marie-Paule L.G.
(86) Numéro de dépôt international: PCT/EP2007/059401
(87) Numéro de publication internationale: WO 2008/034725

(56) Documents cités:
- JP-A- 2004 261 155
- US-A1- 2004 140 900
- US-A1- 2005 143 959

## Description

### Domaine de l'invention

L'invention concerne une méthode et un système de contrôle de postes d'appâtage contre des nuisibles, tels des rongeurs ou des insectes.

Il est nécessaire d'inspecter régulièrement l'état d'appâts disposés à différents endroits à l'intérieur ou à l'extérieur d'un bâtiment afin de contrôler si des nuisibles ont touché ceux-ci et ainsi remplacer ceux-ci si nécessaire. La réalisation d'un rapport périodique sur l'état des appâts dans une zone donnée permet de tirer des conclusions quant à l'hygiène d'un lieu et d'intervenir en conséquence. Il est enfin important, du point de vue de la personne coordonnant le contrôle des appâts, de s'assurer que le contrôle de tous les postes d'appâtage ait effectivement eu lieu.

### État de la technique

A ces fins, on connaît dans l'état de la technique l'utilisation de code-barres apposés sur les postes d'appâtage. La personne réalisant le contrôle des appâts scanne le code-barres associé à chaque poste contrôlé. Ceci permet d'indiquer et prouver que l'appât a été contrôlé durant sa visite. On connaît également l'utilisation de tags RFID sur les postes pour l'identification par radiofréquence de ceux-ci.

Les méthodes de l'état de la technique présentent des désavantages. Un premier est la possibilité de la part de la personne chargée du contrôle de scanner à distance une copie d'un code-barres sans se rendre sur le site où sont effectivement disposés les postes d'appâtage. Un second est le manque de transparence et de fiabilité du point de vue du propriétaire ou utilisateur du bâtiment, appelé « client » dans la suite. Le client n'obtient pas de preuve tangible et certaine que les appâts présents sur le site ont bien été contrôlés à un moment donné.

Le document JP2004261155 décrit un procédé et un système pour le recensement des espèces nuisibles présentes à un endroit donné comprenant un poste d'appâtage unique comprenant des zones d'aire bien définie sous la surveillance d'une caméra reliée par le réseau ou un serveur à un ordinateur permettant l'analyse des images récoltées par la caméra. Une fois les espèces identifiées et leur population estimée, une stratégie d'éradication des nuisances identifiées peut être établie.

### Résumé de l'invention

Un but de l'invention est de fournir une méthode selon la revendication 1 pour le contrôle d'un poste d'appâtage contre des nuisibles et qui offre une meilleure assurance que le poste a bien été contrôlé et une meilleure transparence pour le client.

La méthode selon l'invention offre une meilleure assurance à la personne chargée de coordonner le contrôle des appâts et une meilleure transparence au client. En effet, via un accès au serveur, une personne autorisée peut visualiser simultanément, d'une part: sur la même image, les moyens d'identification de l'appât de manière à identifier celui-ci et la localisation spatiale du contrôle de manière non ambiguë, et l'appât lui-même et donc son état, et enfin, d'autre part: la date associée à la photographie et donc le moment auquel a eu lieu le contrôle. La combinaison de ces trois éléments permet de s'assurer de manière relativement fiable que le contrôle d'un poste donné a bien été réalisé correctement, à un moment donné et à un lieu donné.

La mise à la disposition des photographies comprenant cet ensemble d'informations sur le serveur permet en outre de faciliter une observation des contrôles par le client de la manière la plus transparente possible. Elle permet également au client de réaliser un suivi dans le temps des contrôles effectués.

L'invention concerne aussi un système selon la revendication 7 pour le contrôle d'un poste d'appâtage contre les nuisibles.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
Fig.1 montre un schéma général illustrant une réalisation particulière de la méthode selon l'invention; et
Fig.2 à 5 montrent des vues schématiques d'appâts munis d'une segmentation visuelle pour un contrôle plus aisé.

### Description détaillée de modes de réalisation particuliers

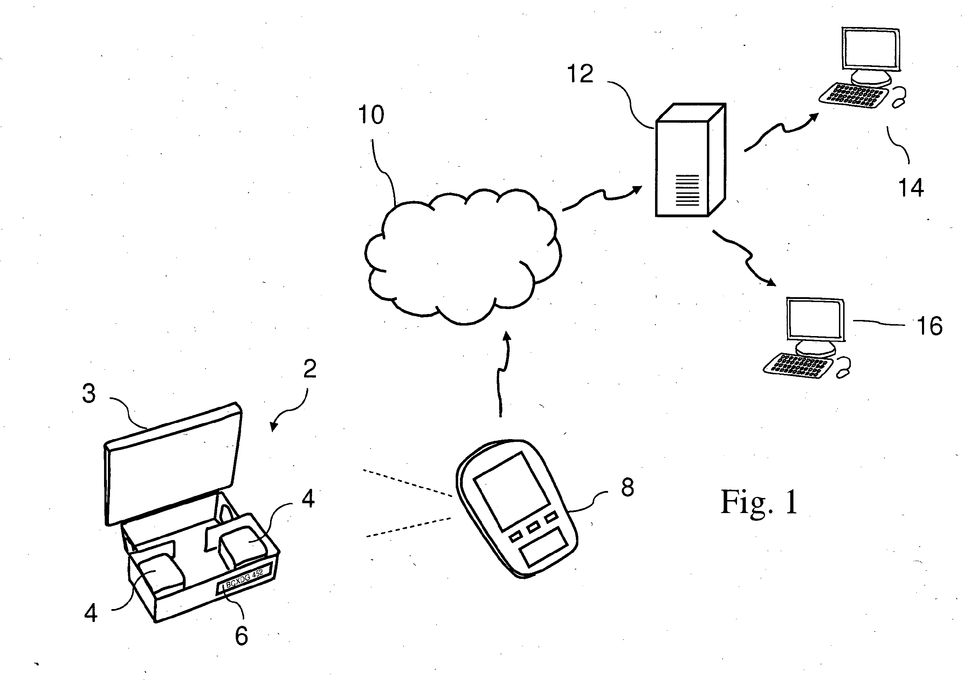

La Fig. 1 représente un schéma général d'une réalisation particulière de la méthode selon l'invention.

Un poste d'appâtage 2 muni d'un couvercle 3 contient deux appâts 4 contre les rongeurs, tels que les rats, les souris ou les mulots. Le poste d'appâtage 2 peut être disposé à même le sol ou non, à un endroit accessible aux nuisibles. Des exemples de tels postes d'appâtage 2 sont décrits dans le brevet français FR1463757 et dans la demande de brevet français FR2564287.

L'appât 4 est constitué d'une substance toxique ou d'une substance détectrice de passage et de présence pour le contrôle et l'éradication des nuisibles.

Le poste d'appâtage 2 est muni de moyens visibles d'identification 6, tels qu'une combinaison alphanumérique inscrite ou imprimée sur une étiquette. La combinaison alphanumérique peut par exemple comprendre une séquence de chiffres ou lettres destinés à identifier successivement le client, le bâtiment ou l'installation où se trouve le poste d'appâtage 2, l'étage du bâtiment, la pièce du bâtiment et la position du poste d'appâtage 2 au sein-même de la pièce.

Un ordinateur portable, ordinateur de poche ou assistant personnel 8 (PDA), ou tout autre appareil électronique portable muni au moins une unité centrale de traitement (CPU), d'une mémoire et d'une interface utilisateur, est utilisé sur le terrain par la personne chargée du contrôle. L'appareil 8 comprend en outre des moyens de photographie intégrés ou auxiliaires et des moyens de télécommunications également soit intégrés soit auxiliaires. L'appareil 8 peut par exemple être un assistant personnel de type HTC Wizard avec appareil photo intégré, commercialisé par la société High Tech Computer Corporation, basée à Taiwan.

La personne chargée du contrôle reçoit un plan de contrôle répertoriant la liste des postes d'appâtage 2 à contrôler, dans un certain ordre. Le bâtiment ou l'installation, l'étage dans,le bâtiment, et le type de visite (contrôle uniquement, contrôle et remplacement des appâts 4 affectés, contrôle et remplacement de tous les appâts 4) constituent des paramètres de la visite et du plan de contrôle. Une minuterie peut être enclenchée pour calculer le temps mis pour effectuer chacune des étapes successives du plan de contrôle.

A proximité de chaque poste d'appâtage 2 du plan de contrôle, la personne chargée du contrôle photographie l'appât 4 et les moyens d'identification visibles 6 associés, par exemple un numéro d'identification 6. Les moyens de photographie de l'appareil 8 sont utilisés à cet effet. La photographie est mémorisée dans l'appareil 8 et est accompagnée d'une indication du moment auquel celle-ci a été prise. La mémorisation ou l'enregistrement peut être fait sous le format JPEG. La personne chargée du contrôle des postes d'appâtage 2 peut également introduire une indication de l'état apparent de l'appât 4 grâce à une interface utilisateur. L'indication de l'état apparent de l'appât est une description de ses caractéristiques telles qu'apparaissant à la personne chargée du contrôle.

Une fois la photographie réalisée et enregistrée, celle-ci est transmise avec l'indication de temps par les moyens de communications ou de télécommunications de l'appareil 8 à travers un réseau 10 vers un serveur 12. Le réseau peut par exemple être un réseau de télécommunications de type téléphonique ou Internet et le transfert des données peut par exemple être fait selon la norme de téléphonie mobile GPRS.

La photographie et l'indication de temps sont alors mises à la disposition sur le serveur 14 pour être consultés par des tiers. Le contenu mis à la disposition sur le serveur est accessible par exemple via Internet, c'est-à-dire qu'il est mis en ligne, ou moyennant une liaison réseau dédicacée. La consultation peut par exemple être réalisée via les protocoles de communication Hypertext Transfer Protocol (HTTP) ou Hypertext Transfer Protocol Secured (HTTPS). Le contenu peut être, quant à lui, par exemple disponible sous le format Hypertext Markup Language (HTML). Une interface utilisateur de visualisation est accessible au client 16 et la personne 14 ou la société coordonnant les contrôles.

Dans une réalisation particulière, cette mise à la disposition est restreinte et a lieu seulement pour le client 16 et la société 14 chargée de coordonner le contrôle des postes d'appâtage 2. En d'autres termes, l'accès au contenu du serveur 12 se fait sous autorisation.

Dans une réalisation particulière, les moyens de mise à disposition du système selon l'invention sont tels que la photographie est associée, sur le station de travail du client 16 accédant serveur 12, à une carte du bâtiment. Sur cette carte se trouvent lés postes d'appâtage 2 de manière à permettre l'accès aux données de contrôles des différents postes d'appâtage 2 présents, grâce à une interface utilisateur avec localisation intuitive.

Dans une réalisation particulière, des signes permettant de localiser les postes d'appâtage 2 se trouvent sur la carte du bâtiment ou le plan de l'installation représenté sur l'interface utilisateur de visualisation. Ces signes sont de formes, de textures et/ou de couleurs différentes en fonction de l'état des postes d'appâtage 2. Par exemple, un point ou disque vert peut être associé à la représentation d'un poste d'appâtage 2 qui n'a pas présenté de signes d'un passage récent de nuisibles. Sur l'interface utilisateur de visualisation, cliquer avec un curseur guidé par une souris à l'endroit du point vert ou rouge peut permettre d'acquérir plus de détails concernant un poste d'appâtage 2 donné.

Dans une réalisation particulière, l'interface utilisateur de visualisation permet de visualiser au cours d'une même session informatique les cartes de plusieurs sites ou installations d'un même client de manière à aisément pouvoir en inspecter la salubrité.

Dans une réalisation particulière, un rapport incluant l'historique des interventions, des données statistiques, les actions entreprises et proposées, le type des appâts 4 installés et leur toxicité est disponible en ligne.

Dans une réalisation particulière, la surface visible des appâts 4 est segmentée en parties présentant des caractéristiques visuelles intentionnellement distinctes. Il a été observé que ce type de topographie de surface des appâts 4 permettait une meilleure visualisation de la partie de l'appât 4 affectée sur la photographie.

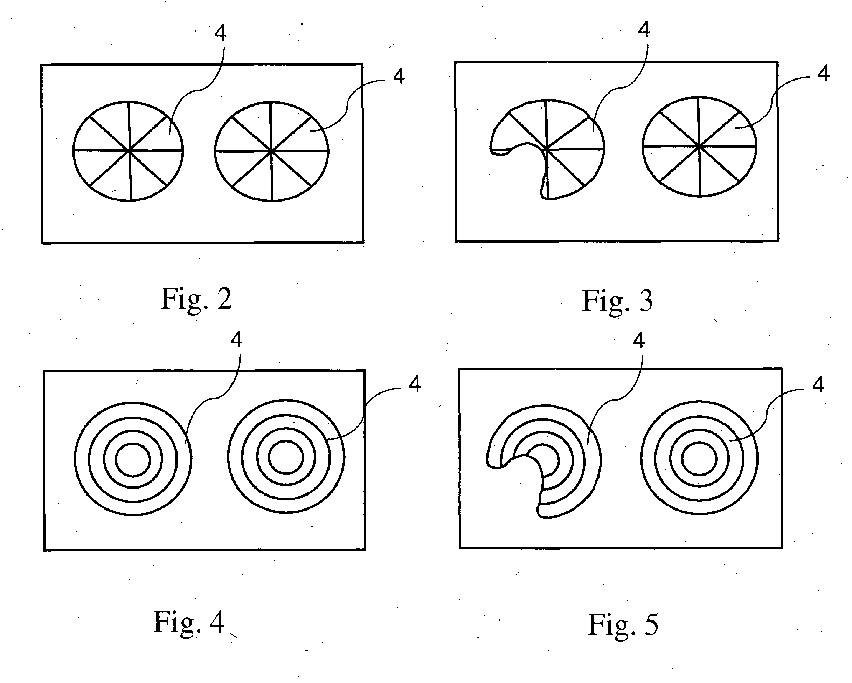

Dans une réalisation plus particulière illustrée aux Fig. 2 et 3, l'appât est muni d'une surface visible comportant des quartiers ou portions de couleurs ou textures différentes. La Fig. 2 illustre des appâts non affectés et la Fig. 3 illustre un appât affecté et un appât non affecté. Dans une autre réalisation plus particulière illustrée aux Fig. 4 et 5, la surface visible est munie de cercles concentriques de couleurs ou textures différentes.

Ces réalisations permettent l'observation aisée, directement (par la personne chargée du contrôle sur le terrain) ou sur la photographie (par la personne chargée de coordonner le contrôle ou par le client) non seulement du résultat d'une attaque par un nuisible et de la quantification de celle-ci. La quantification peut correspondre au nombre de zones affectées, en ce sens que le nombre de zones affectées peut être associé à une action proposée. Par exemple, une action peut être attribuée à la personne chargée du contrôle lors du contrôle par le logiciel en opération sur l'ordinateur de poche 8 suite à l'introduction du nombre de quartiers, portions ou cercles affectés (après observation).

## Revendications

1. Méthode pour le contrôle d'au moins un poste d'appâtage (2) contre les nuisibles, le poste d'appâtage (2) comprenant au moins un appât (4) et étant accompagné de moyens visibles d'identification (6) disposés sur le poste d'appâtage (2) ou à proximité de celui-ci, comprenant :
une étape de photographie simultanée et dans un même champ de l'au moins un appât (4) et des moyens visibles d'identification (6);
une étape d'enregistrement de la photographie obtenue et d'une indication de temps correspondant au moment auquel la photographie a été réalisée; et
une étape de transmission de la photographie et de l'indication de temps vers un serveur (12) pour la mise à la disposition sur celui-ci de la photographie et de l'indication de temps;
l'étape de photographie étant réalisée au moyen d'un appareil électronique portable muni d'une unité centrale de traitement, d'une mémoire et d'une interface utilisateur, de moyens de photographie intégrés ou auxiliaires et de moyen de télécommunications intégrés ou auxiliaires.

2. Méthode selon la revendication 1, comprenant en outre, entre l'étape d'enregistrement et l'étape de transmission, une étape de réception via une interface utilisateur d'une indication de l'état apparent de l'au moins un appât (4); et dans laquelle l'étape de transmission comprend en outre la transmission de l'indication de l'état apparent pour la mise à la disposition de celle-ci sur le serveur (12).

3. Méthode selon la revendication 1 ou 2, pour le contrôle d'un poste d'appâtage (2) parmi une pluralité de postes d'appâtage (2), comprenant en outre, après l'étape de transmission, une étape de mise à la disposition sur le serveur (12) d'au moins la photographie et l'indication de temps, celles-ci étant accessibles à partir d'une carte représentée sur une interface utilisateur et représentant un bâtiment ou une installation et la pluralité de postes d'appâtage (2).

4. Méthode selon l'une quelconque des revendications précédentes, appliquée à un ou plusieurs appâts (4) comprenant chacun une segmentation de leur surface visible en zones ayant des caractéristiques visuelles différentes.

5. Méthode selon la revendication 4, dans laquelle les caractéristiques visuelles différentes sont des caractéristiques de coloris.

6. Méthode selon la revendication 4, dans laquelle les caractéristiques visuelles différentes sont des caractéristiques de texture.

7. Système pour le contrôle d'au moins un poste d'appâtage (2) contre les nuisibles, comprenant au moins un poste d'appâtage (2) comprenant au moins un appât (4) et étant accompagné de moyens visibles d'identification (6) disposés sur le poste d'appâtage (2) ou à proximité de celui-ci; d'un appareil électronique portable muni d'une unité centrale de traitement, d'une mémoire et d'une interface utilisateur, de moyens de photographie adaptés pour réaliser une photographie simultanée et dans un même champ de l'au moins un appât (4) et des moyens visibles d'identification (6); de moyens d'enregistrement adaptés pour enregistrer une photographie obtenue par les moyens de photographie et d'une indication de temps correspondant au moment auquel la photographie a été réalisée; et de moyens de transmission adaptés pour transmettre la photographie et de l'indication de temps vers un serveur (12) pour la mise à la disposition sur celui-ci de la photographie et de l'indication de temps.

8. Système selon la revendication 7, comprenant en outre des moyens de réception adaptés pour recevoir via une interface utilisateur une indication de l'état apparent de l'au moins un appât (4); et dans laquelle les moyens de transmission sont en outre adaptés pour transmettre l'indication de l'état apparent pour la mise à disposition de celle-ci sur le serveur (12).

9. Système selon la revendication 7 ou 8, pour le contrôle d'un poste d'appâtage (2) parmi une pluralité de postes d'appâtage (2), comprenant en outre des moyens adaptés pour mettre à la disposition sur le serveur (12) d'au moins la photographie et l'indication de temps, de manière à ce que celles-ci soient accessibles à partir d'une carte représentée sur une interface utilisateur et représentant un bâtiment ou une installation et la pluralité de postes d'appâtage (2).

10. Système selon l'une quelconque des revendications 7 à 9, comprenant un ou plusieurs appâts (4) comprenant chacun une segmentation de leur surface visible en zones ayant des caractéristiques visuelles différentes.

11. Système selon la revendication 10, dans lequel les caractéristiques visuelles différentes sont des caractéristiques de coloris.

12. Système selon la revendication 10, dans lequel les caractéristiques visuelles différentes sont des caractéristiques de texture.

## Patentansprüche

1. Verfahren zum Kontrollieren wenigstens einer Köderstation (2) gegen Schädlinge, wobei die Köderstation (2) wenigstens einen Köder (4) umfasst und von sichtbaren Identifikationsmitteln (6) begleitet ist, die auf der Köderstation (2) oder in deren Nähe angeordnet sind, umfassend:
einen Schritt des gleichzeitigen und in einem Sichtfeld stattfindenden Fotografierens von dem wenigstens einen Köder (4) und der sichtbaren Identifikationsmittel (6);
einen Schritt des Speicherns der erhaltenen Fotografie und einer Zeitangabe, die dem Moment entspricht, in dem die Fotografie gemacht wurde; und
einen Schritt des Übermittelns der Fotografie und der Zeitangabe an einen Server (12), um auf diesem die Fotografie und die Zeitangabe bereitzustellen;
wobei der Schritt des Fotografierens mit einem tragbaren elektronischen Gerät erfolgt, das mit einer Verarbeitungszentraleinheit, einem Speicher und einer Benutzerschnittstelle, integrierten oder hilfsweisen Fotografiemitteln und integrierten oder hilfsweisen Telekommunikationsmitteln ausgestattet ist.

2. Verfahren nach Anspruch 1, zwischen dem Schritt des Speicherns und dem Schritt des Übermittelns ferner umfassend einen Schritt des Empfangens einer Angabe des offensichtlichen Zustands von wenigstens einem Köder (4) über eine Benutzerschnittstelle; und wobei der Schritt des Übermittelns ferner die Übermittlung der Angabe des offensichtlichen Zustands für deren Bereitstellung auf dem Server (12) umfasst.

3. Verfahren nach Anspruch 1 oder 2, zum Kontrollieren einer Köderstation (2) von mehreren Köderstationen (2), nach dem Schritt des Übermittelns ferner umfassend einen Schritt des Bereitstellens von wenigstens der Fotografie und der Zeitangabe auf dem Server (12), wobei diese ausgehend von einer Karte zugänglich sind, die auf einer Benutzerschnittstelle dargestellt ist und ein Gebäude oder eine Anlage und die mehreren Köderstationen (2) darstellt.

4. Verfahren nach einem der vorhergehenden Ansprüche, das auf einen oder mehrere Köder (4) angewendet wird, die jeweils eine Segmentierung ihrer sichtbaren Oberfläche in Zonen umfassen, die unterschiedliche optische Eigenschaften aufweisen.

5. Verfahren nach Anspruch 4, wobei die unterschiedlichen optischen Eigenschaften Farbeigenschaften sind.

6. Verfahren nach Anspruch 4, wobei die unterschiedlichen optischen Eigenschaften Textureigenschaften sind.

7. System zum Kontrollieren wenigstens einer Köderstation (2) gegen Schädlinge, umfassend wenigstens eine Köderstation (2), die wenigstens einen Köder (4) umfasst und von sichtbaren Identifikationsmitteln (6) begleitet ist, die auf der Köderstation (2) oder in deren Nähe angeordnet sind; ein tragbares elektronisches Gerät, das mit einer Verarbeitungszentraleinheit, einem Speicher und einer Benutzerschnittstelle, mit Fotografiemitteln, die angepasst sind, um gleichzeitig und in einem Sichtfeld eine Fotografie von wenigstens einem Köder (4) und sichtbaren Identifikationsmitteln (6) anzufertigen; mit Speichermitteln, die angepasst sind, um eine mit den Fotografiemitteln erhaltene Fotografie und eine Zeitangabe zu speichern, die dem Moment entspricht, in dem die Fotografie gemacht wurde; und mit Übermittlungsmitteln ausgestattet ist, die angepasst sind, um die Fotografie und die Zeitangabe an einen Server (12) zu übermitteln, um auf diesem die Fotografie und die Zeitangabe bereitzustellen.

8. System nach Anspruch 7, ferner umfassend Empfangsmittel, die angepasst sind, um über eine Benutzerschnittstelle eine Angabe des offensichtlichen Zustands von wenigstens einem Köder (4) zu empfangen; und wobei die Übermittlungsmittel ferner angepasst sind, um die Angabe des offensichtlichen Zustands für deren Bereitstellung auf dem Server (12) zu übermitteln.

9. System nach Anspruch 7 oder 8, zum Kontrollieren einer Köderstation (2) von mehreren Köderstationen (2), ferner umfassend Mittel, die angepasst sind, um wenigstens die Fotografie und die Zeitangabe auf dem Server (12) bereitzustellen, so dass diese ausgehend von einer Karte zugänglich sind, die auf einer Benutzerschnittstelle dargestellt ist und ein Gebäude oder eine Anlage und die mehreren Köderstationen (2) darstellt.

10. System nach einem der Ansprüche 7 bis 9, umfassend einen oder mehrere Köder (4), die jeweils eine Segmentierung ihrer sichtbaren Oberfläche in Zonen umfassen, die unterschiedliche optische Eigenschaften aufweisen.

11. System nach Anspruch 10, wobei die unterschiedlichen optischen Eigenschaften Farbeigenschaften sind.

12. System nach Anspruch 10, wobei die unterschiedlichen optischen Eigenschaften Textureigenschaften sind.

## Claims

1. Method for checking at least one baiting station (2) against pests, the baiting station (2) comprising at least one bait (4) and being accompanied by visible identification means (6) disposed on the baiting station (2) or close thereto, comprising:
a simultaneous photography step in the same field as at least one bait (4) and visible identification means (6);
a step of recording the photograph obtained and a time indication corresponding to the moment at which the photograph was taken; and
a step of transmitting the photograph and the time indication to a server (12) for making the photograph and the time indication available thereon;
the photography step being implemented by means of a portable electronic apparatus provided with a central processing unit, a memory and a user interface, integrated or auxiliary photography means and integrated or auxiliary telecommunication means.

2. Method according to claim 1, further comprising, between the recording step and the transmission step, a step of reception via a user interface of an indication of the visible state of at least one bait (4); and in which the transmission step further comprises the transmission of the indication of the visible state for making it available on the server (12).

3. Method according to claim 1 or 2, for checking a baiting station (2) among a plurality of baiting stations (2), further comprising, after the transmission step, a step of making available on the server (12) at least one photograph and the time indication, these being accessible from a map depicted on a user interface and representing a building or an installation and the plurality of baiting stations (2).

4. Method according to any one of the preceding claims, applied to one or more baits (4) each comprising a segmentation of their visible surface into zones having different visual characteristics.

5. Method according to claim 4, in which the different visual characteristics are colour characteristics.

6. Method according to claim 4, in which the different visual characteristics are texture characteristics.

7. System for checking at least one baiting station (2) against pests, comprising at least one baiting station (2) comprising at least one bait (4) and being accompanied by visible identification means (6) disposed on the baiting station (2) or close thereto; a portable electronic apparatus provided with a central processing unit, a memory and a user interface, photography means suitable for taking a simultaneous photograph in the same field of at least one bait (4) and visible identification means (6); recording means suitable for recording a photograph obtained by the photography means and a time indication corresponding to the moment at which the photograph was taken; and transmission means suitable for transmitting the photograph and the time indication to a server (12) for making the photograph and time indication available thereon.

8. System according to claim 7, further comprising reception means suitable for receiving, via a user interface, an indication of the visible state of at least one bait (4); and in which the transmission means are also suitable for transmitting the indication of the visible state for making it available on the server (12).

9. System according to claim 7 or 8, for checking a baiting station (2) among a plurality of baiting stations (2), further comprising means suitable for making available on the server (12) at least the photograph and the time indication, so that these are accessible from a map depicted on a user interface and representing a building or an installation and the plurality of baiting stations (2).

10. System according to any one of claims 7 to 9, comprising one or more baits (4) each comprising a segmentation of their visible surface into zones having different visual characteristics.

11. System according to claim 10, in which the different visual characteristics are colour characteristics.

12. System according to claim 10, in which the different visual characteristics are texture characteristics.
